# EUROPEAN PATENT APPLICATION

(11) **EP 2 498 523 A1**
(43) Date of publication of application: **12.09.2012**
(21) Application number: 10827911.8
(22) Date of filing: 04.11.2010
(51) Int. Cl.: H04W 4/14

(54) **SHORT MESSAGE FORWARDING METHOD AND MOBILE TERMINAL**

(30) Priority: 04.11.2009 CN 200910110023
(71) Applicant: Huawei Device Co., Ltd., Longgang District Shenzhen Guangdong 518129 (CN)
(72) Inventor: DENG, Junjie, Guangdong 518129 (CN)
(74) Representative: Epping - Hermann - Fischer
(86) International application number: PCT/CN2010/078401
(87) International publication number: WO 2011/054297

(57) **Abstract**

Embodiments of the present invention relate to the field of communications, and mainly provide a short message forwarding method. The method includes: receiving a short message; performing forwarding matching according to attribute information of the short message, wherein the attribute information is content and/or a receiving time of the short message; and according to a result of the forwarding matching, forwarding the short message to a corresponding telephone number. In the technical solutions according to the embodiments of the present invention, a telephone number corresponding to a short message is obtained through matching by performing keyword matching or time matching on a received short message, and the short message is then forwarded to the telephone number, so it is implemented that a terminal user sets autonomously on the terminal which short messages are forwarded to which users, and the terminal user with does not need to perform service registration at a network side, thereby reducing the communication cost of the user.

## Description

This application claims priority to Chinese Patent Application No. 200910110023.7, filed with the Chinese Patent Office on November 4, 2009, and entitled "SHORT MESSAGE FORWARDING METHOD AND MOBILE TERMINAL", which is incorporated herein by reference in its entirety.

### FIELD OF THE INVENTION

The present invention relates to the field of communications, and in particular to a short message forwarding method and a mobile terminal.

### BACKGROUND OF THE INVENTION

The short message service (SMS, Short Message Service) is the most common data service bearer mode in a current mobile communications network. The short message service serves as a wireless data transmission service, and the sending in a mobile communications network is mainly divided into two independent processes. (1) A process of a mobile terminal originating a short message (that is, MO, a Mobile Originated process), that is, a process in which a short message sending terminal first sends a short message to a short message service center (SMSC, Short Message Service Center) which it belongs to when intending to send the short message to a receiving terminal. (2) A process of a mobile terminal terminating a short message (that is, MT, Mobile Terminated process), that is, a process in which the short message service center which the short message sending terminal belongs to needs to send the short message to the receiving terminal according to the number information of the short message receiving terminal after receiving the short message. When the receiving terminal and the sending terminal are located at a same operating network, the short message service center which the sending terminal belongs to needs to perform addressing according the number information of the receiving terminal, and send the short message to the mobile switching center where the receiving terminal is located, and then the mobile switching center sends the short message to the receiving terminal through the mobile communications network. However, when the receiving terminal and the sending terminal are located at different operating networks, the short message service center which the sending terminal belongs to needs to send a short message to an interworking gateway device first, and after protocol conversion with the interworking gateway device, the short message is then sent to the short message service center that is connected with the interworking gateway device for subsequent delivery.

The above is the whole process of sending and receiving a short message in the mobile communications network currently. However, with the rapid development of the short message service, users have higher and higher demands for service types of short messages. Therefore, network operators need to develop more versatile short message services in accordance with the demands of users. The short message transfer service is a short message service with a new operating mode proposed in this case. Specifically, the short message transfer service refers to that: after a user applies to transfer all short messages received by a terminal (assuming that the number is A) to another terminal (assuming that the number is B) for receiving a service at a network side, all the short messages that a short message originator originally intends to send to the user terminal with the number A are transferred to the designated terminal with the number B for receiving, thereby implementing the short message transfer.

In the implementation of the embodiments of the present invention, the inventor finds that the prior art at least has the following technical problems. The above short message forwarding service needs to forward service registration at the network side, which increases the communication cost of a user, and meanwhile, the terminal user cannot autonomously select which short messages are transferred to which users.

### SUMMARY OF THE INVENTION

To solve the above technical problems, an embodiment of the present invention provides a short message forwarding method. The method includes: receiving a short message; performing forwarding matching according to attribute information of the short message, where the attribute information is content and/or a receiving time of the short message; and according to a result of the forwarding matching, forwarding the short message to a corresponding telephone number.

Meanwhile, an embodiment of the present invention further provides a mobile terminal. The mobile terminal includes: a receiving module, configured to receive a short message, where the short message is a short message sent from a short message center server at a network side or email information received at a mobile terminal side; a matching module, configured to perform forwarding matching according the received short message; and a forwarding module, configured to forward the short message according to a matching result of the matching module.

In technical solution according to the embodiments of the present invention, a telephone number corresponding to the short message is obtained through matching by performing keyword matching or time matching on the received short message, and the short message is then forwarded to the telephone number, so it is implemented that a terminal user sets autonomously on the terminal which short messages are forwarded to which users, and the terminal user does not need to perform service registration at the network side, thereby reducing the communication cost of the user.

### BRIEF DESCRIPTION OF THE DRAWINGS

FIG 1 is a flow chart of a method according to Embodiment 1 of the present invention;
FIG 2 is a flow chart of a method according to Embodiment 2 of the present invention;
FIG 3 is a flow chart of a method according to Embodiment 3 of the present invention;
FIG 4 is a schematic diagram of an apparatus according to Embodiment 4 of the present invention;
FIG 5 is a schematic diagram of another apparatus according to Embodiment 4 of the present invention; and
FIG 6 is a schematic diagram of another apparatus according to Embodiment 4 of the present invention.

### DETAILED DESCRIPTION OF THE EMBODIMENTS

The technical solutions in the embodiments of the present invention are clearly and completely described in the following with reference to the accompanying drawings. It is obvious that the described embodiments are only a part rather than all of the embodiments of the present invention. All other embodiments obtained by persons of ordinary skill in the art based on the embodiments of the present invention without creative efforts shall fall within the protection scope of the present invention.

### Embodiment 1

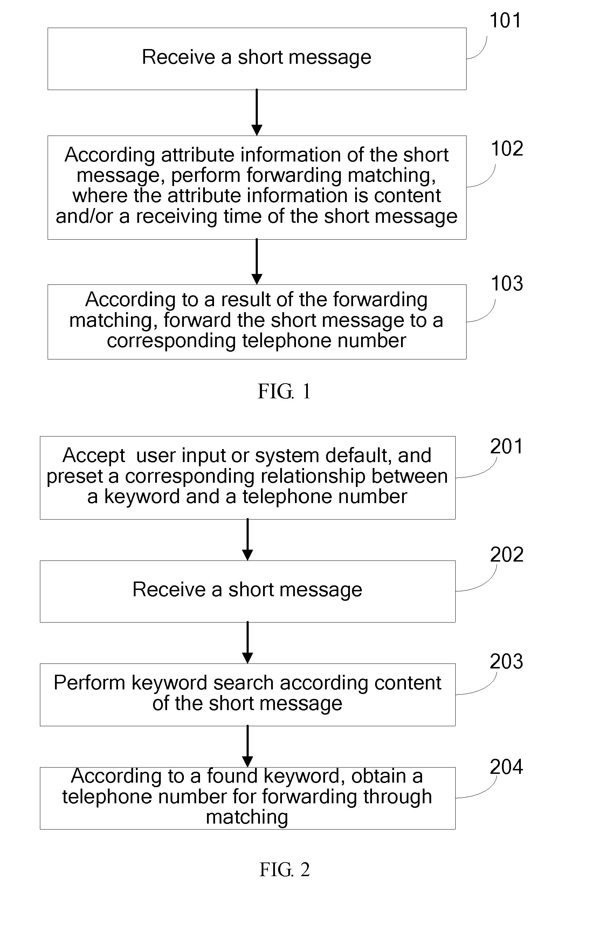

Embodiment 1 of the present invention provides a short message forwarding method. As shown in FIG 1, the method includes the following.

Step 101: Receive a short message, where the short message is a short message (Short Message) sent from a short message service center server at a network side or email information received at a mobile terminal side.

Step 102: Perform forwarding matching according to attribute information of the short message, where the attribute information is content and/or a receiving time of the short message.

In this step, the forwarding matching is performed according to the content of the received short message or the time of receiving the short message in practice, and the forwarding matching is to find in a database a corresponding relationship between content or a receiving time of a short message meeting a specific condition and a telephone number. For example, if a user receives a short message between 12:00 and 13:00 at noon, the terminal automatically searches the database for a corresponding telephone number in the forwarding matching with the receiving time between 12:00 and 13:00. In this way, the forwarding matching operation is performed. Definitely, the forwarding matching includes, but is not limited to, the above manner described in the embodiment of the present invention.

Step 103: Forward the short message to a corresponding telephone number according a result of the forwarding matching.

According to the matching result in step 102, the short message is forwarded to the telephone number in the result.

In the technical solution according to the embodiment of the present invention, a telephone number corresponding to the short message is obtained through matching by performing keyword matching or time matching on the received short message, and the short message is then forwarded to the telephone number, so it is implemented that a terminal user sets autonomously on the terminal which short messages are forwarded to which users, and the terminal user does not need to perform service registration at a network side, thereby reducing the communication cost of the user.

### Embodiment 2

Embodiment 2 of the present invention provides a short message forwarding method. As shown in FIG 2, the method specifically includes the following.

Step 201: Accept user input or system default, and preset a corresponding relationship between a keyword and a telephone number.

A user may customize the corresponding relationship between the keyword and the telephone number. For example, the user is an owner of an Internet shop who runs an online clothing store that sells jackets and pants and hires two customer service representatives, A and B, and the user may customize a corresponding relationship between a keyword and a telephone number for forwarding, as shown in Table 1. In Table 1, a keyword may be a single word or a phrase, or a retrieval string.

**Table 1**

| **Keyword (Retrieval string)** | **Telephone Number** |
|---|---|
| a = (jacket or shirt or coat) and (price or low price or discount or express delivery) | 13012345678 |
| b = (pants or trousers or suit pants or cotton pants) and (price or low price or discount or express delivery) | 15987654321 |

Step 202: Receive a short message.

Step 203: Perform keyword search according to content of the short message.

In Table 1, the retrieval string is used by the terminal to retrieve whether the received short message has the same keyword that matches the preset keyword. A telephone number corresponding to the keyword can be known through the keyword search. For example, the terminal receives a short message with the content: "Excuse me, can I get this coat at a lower price than 259 yuan?" The terminal performs keyword search to find that the keywords in the content of the short message meet the demands of Group a.

Step 204: Obtain, through matching, a telephone number for forwarding according to a found keyword. After the terminal obtains through matching that the demands of Group a in Table 1 are met by performing keyword search, the telephone number corresponding to Group a may be found.

Step 205: Forward the short message to the corresponding telephone number according a result of the forwarding matching.

Definitely, if the matching result is null null according to the keyword search, the short message is not forwarded.

In the technical solution according to the embodiment of the present invention, a telephone number corresponding to the short message is obtained through matching by performing keyword matching on the received short message, and the short message is then forwarded to the telephone number, so it is implemented that a terminal user sets autonomously on the terminal which short messages are forwarded to which users, and the terminal user does not need to perform service registration at a network side, thereby reducing the communication cost of the user.

### Embodiment 3

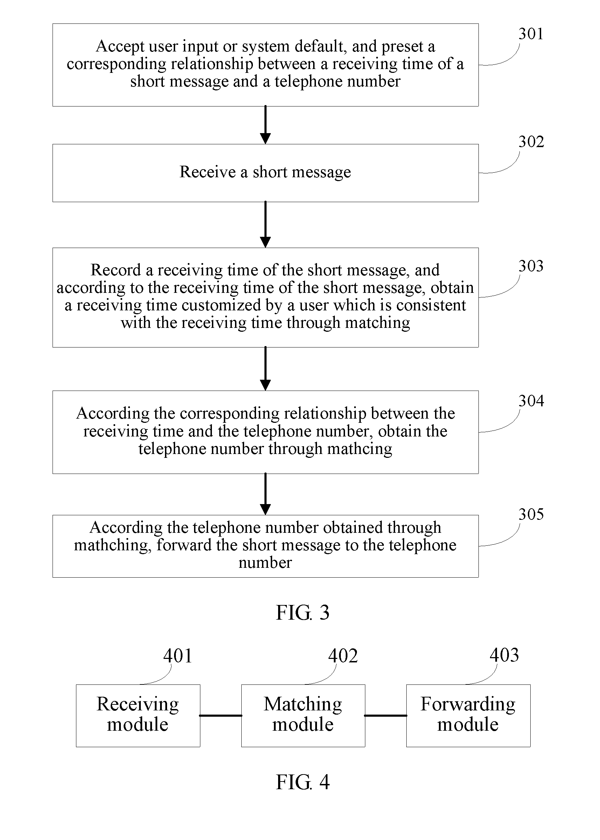

Embodiment 3 of the present invention provides a short message forwarding method. As shown in FIG 3, the method includes the following.

Step 301: Accept user input or system default, and preset a corresponding relationship between a receiving time of a short message and a telephone number. As shown in Table 2, within a certain period of time, a received short message corresponds to a set telephone number.

**Table 2**

| **Receiving Time** | **Telephone Number** |
|---|---|
| c=18:00~23:59 | 13012345678 |
| d=00:00~07:59 | 15987654321 |

Step 302: Receive a short message.

Step 303: Record a receiving time of the short message, and according to the receiving time of the short message, and obtain, through matching, a receiving time customized by a user which is consistent with the receiving time. For example, according to Table 2, if the terminal receives a short message at about 22:00, it is automatically obtained through matching that Group a is met in the database.

Step 304: After the receiving time is obtained through matching, obtain, through matching, a telephone number according to the corresponding relationship between the receiving time and the telephone number.

Step 305: According to the telephone number obtained through matching, forward the short message to the telephone number.

Definitely, if the value of the matching result is null null, it indicates that no corresponding telephone number is obtained through matching, so the short message is not forwarded.

In other embodiments, the keyword search matching in Embodiment 2 and the receiving time matching in Embodiment 3 may be used at the same time. As shown in FIG 3, the short message is forwarded only when a received short message meets both (1) short message keyword (1) and (2) receiving time at the same time. For specific steps, reference may be made to the content of Embodiments 2 and Embodiment 3.

**Table 3**

| **Keyword (Retrieval string)** | **Receiving Time** | **Telephone Number** |
|---|---|---|
| a = (jacket or shirt or coat) and (price or low price or discount or express delivery) | c=18:00~23:59 | 13012345678 |
| b = (pants or trousers or suit pants or cotton pants) and (price or low price or discount or express delivery) | d=00:00~07:59 | 15987654321 |

In the technical solution according to the embodiment of the present invention, a telephone number corresponding to the short message is obtained through matching by performing matching on the received short message, and the short message is then forwarded to the telephone number, so it is implemented that a terminal user sets autonomously on the terminal which short messages are forwarded to which users, and the terminal user does not need perform service registration at a network side, thereby reducing the communication cost of the user.

### Embodiment 4

Embodiment 4 of the present invention provides a mobile terminal. The mobile terminal includes: a receiving module 401, a matching module 402, and a forwarding module 403.

The receiving module 401 is configured to receive a short message, where the short message is a short message sent from a short message center server at a network side or email information received at a mobile terminal side.

The matching module 402 is configured to perform forwarding matching according to the received short message, where a rule for the forwarding matching may be implemented with reference to the above embodiments.

The forwarding module 403 is configured to forward the short message according to the matching result of the matching module 402.

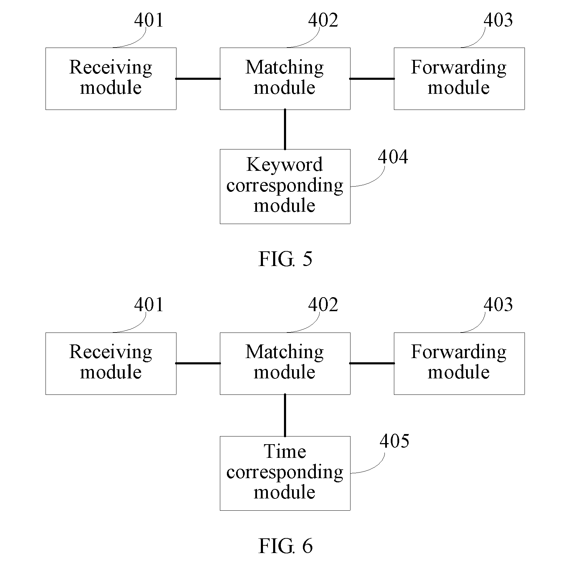

As shown in FIG 5, the mobile terminal may further include:
a keyword corresponding module 404, configured to preset and store a corresponding relationship between a keyword of a short message and a telephone number.

The matching module 402 is further configured to perform keyword forwarding matching according to the received short message and the corresponding relationship in the keyword corresponding module 404.

As shown in FIG 6, the mobile terminal may further include:
a time corresponding module 405, configured to preset and store a corresponding relationship between a receiving time of a short message and a telephone number.

The matching module 402 is further configured to perform time matching according to the receiving time of the short message and the corresponding relationship in the time corresponding module 405.

In the technical solution according to the embodiment of the present invention, a telephone number corresponding to the short message is obtained through matching by performing matching on the received short message, and the short message is then forwarded to the telephone number, so it is implemented that a terminal user sets autonomously on the terminal which short messages are forwarded to which users, and the terminal user does not need to perform service registration at a network side, thereby reducing the communication cost of the user.

Persons of ordinary skill in the art may understand that all or a part of the flow of the method according to the embodiments may be implemented by a computer program instructing relevant hardware. The program may be stored in a computer readable storage medium. When the program is run, the flows of the above methods according to the embodiments are performed. The storage medium may be a magnetic disk, an optical disk, a read-only memory (Read-Only Memory, ROM) or a random access memory (Random Access Memory, RAM).

The above descriptions are merely exemplary embodiments of the present invention, but not intend to limit the present invention. Any modification, equivalent replacement, and improvement made without departing from the spirit and principle of the present invention shall fall within the protection scope of the present invention.

## Claims

1. A short message forwarding method, wherein the method comprises:
receiving a short message;
performing forwarding matching according to attribute information of the short message, wherein the attribute information is content and/or a receiving time of the short message; and
forwarding the short message to a corresponding telephone number according a result of the forwarding matching.

2. The method according to claim 1, wherein the short message is a short message sent from a short message service center server at a network side or email information received at a mobile terminal side.

3. The method according to claim 1, before the receiving the short message, further comprising: accepting user input or system default, and presetting a corresponding relationship between a keyword and a telephone number.

4. The method according claim 3, wherein the performing forwarding matching according to the attribute information of the short message specifically comprises:
performing keyword search according to the content of the short message; and
obtaining, through matching, a telephone number for forwarding according to a found keyword.

5. The method according to claim 1, before the receiving the short message, further comprising: accepting user input or system default, and presetting a corresponding relationship between a receiving time of a short message and a telephone number.

6. The method according claim 5, wherein the performing forwarding matching according to the attribute information of the short message specifically comprises:
recording the receiving time of the short message; and
obtaining, through matching, a telephone number for forwarding according to the receiving time.

7. The method according claim 1, wherein when a result of the forwarding matching is null, the short message is not forwarded.

8. A mobile terminal, wherein the mobile terminal comprises:
a receiving module, configured to receive a short message, wherein the short message is a short message sent from a short message center server at a network side or email information received at a mobile terminal side;
a matching module, configured to perform forwarding matching according to the received short message; and
a forwarding module, configured to forward the short message according to a matching result of the matching module.

9. The mobile terminal according to claim 8, wherein the mobile terminal further comprises:
a keyword corresponding module, configured to preset and store a corresponding relationship between a keyword of a short message and a telephone number, wherein
the matching module is further configured to perform keyword forwarding matching according to the received short message and the corresponding relationship in the keyword corresponding module.

10. The mobile terminal according to claim 8, wherein the mobile terminal further comprises:
a time corresponding module, configured to preset and store a corresponding relationship between a receiving time of a short message and a telephone number; wherein
the matching module is further configured to perform time matching on the corresponding relationship in the time corresponding module according to the receiving time of the short message.
